# DEMANDE DE BREVET EUROPEEN

(11) **EP 0 752 716 A1**
(43) Date de publication de la demande: **08.01.1997**
(21) Numéro de dépôt: 96401447.6
(22) Date de dépôt: 01.07.1996
(51) Int. Cl.: H01J 41/06, G01L 21/34

(54) **Dispositif d'amorçage et/ou de maintien d'une décharge et jauge à vide à cathode froide comportant un tel dispositif**

(30) Priorité: 03.07.1995 FR 9508000
(71) Demandeur: COMMISSARIAT A L'ENERGIE ATOMIQUE, 75015 Paris Cédex 15 (FR)
(72) Inventeur: Baptist, Robert, 38560 Jarrie (FR)
(74) Mandataire: Dubois-Chabert, Guy

(57) **Abrégé**

La présente invention concerne un dispositif d'amorçage et/ou de maintien d'une décharge apte à être disposée dans une enceinte (16) à l'intérieur de laquelle se trouve une zone de décharge confinée par un champ électromagnétique, ce dispositif comportant une source d'électrons à mîcropointes (20) disposée à proximité de ladite zone et des moyen de polarisation (23) de la source (20) de façon à ce qu'elle émette des électrons vers la zone de décharge afin d'amorcer et/ou de maintenir ladite décharge.

L'invention concerne également une jauge à vide à cathode froide comportant un tel dispositif.

## Description

### Domaine technique

La présente invention conceme un dispositif d'amorçage et/ou de maintien d'une décharge et une jauge à vide à cathode froide comportant un tel dispositif.

### Etat de la technique antérieure

Le dispositif d'amorçage de l'invention est un élément modulaire pouvant se rajouter sur n'importe quel type de jauge à cathode froide (à condition bien sûr de bien choisir les brides de raccordement) ou même sur d'autres dispositifs tels que des tubes à décharge pour assurer leur amorçage ou encore dans des réacteurs à plasma utilisant des décharges.

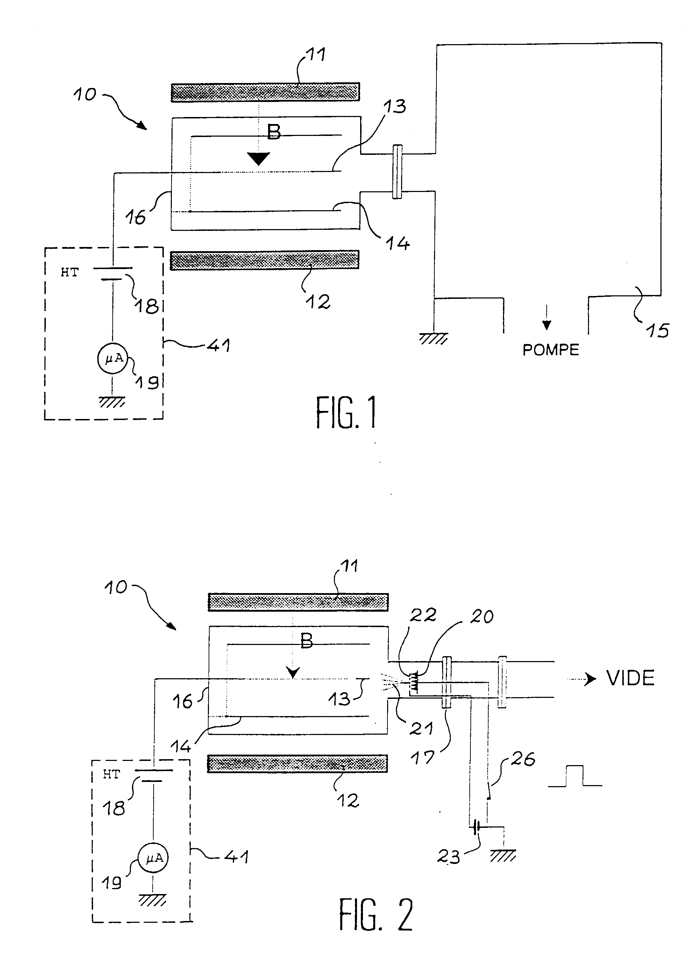

Les jauges à vide du type jauges à cathode froide englobent d'une manière générale les jauges de types Penning, magnétron et magnétron inversé (voir référence [1]). Sur la figure 1 est représentée une jauge de type Penning 10 comprenant des aimants 11, 12, une anode 13, une cathode 14 dans une enceinte 16, et une chambre à vide 15 reliée à l'enceinte 16. Suivant leur type, ces jauges permettent de mesurer des pressions allant de 10⁻² mbar à 10⁻⁸ mbar ou 10⁻¹⁰ mbar, voire en dessous 10⁻¹⁰ mbar. Ces jauges sont connues de l'homme de l'art et largement répandues dans les laboratoires et dans l'industrie (en particulier en micro-électronique). Leur principe repose sur la mesure d'un courant électronique sur l'électrode "anode" ou d'un courant ionique sur l'électrode "cathode", courants qui sont générés par une décharge auto-entretenue et qui sont proportionnels à (ou fonction de) la pression que l'on cherche à déterminer. L'auto-entretien de cette décharge résulte de l'importante longueur des trajectoires électroniques dans la jauge, que l'on obtient grâce à une superposition judicieuse de champs électriques et magnétiques dans celle-ci. Toutefois, si ces jauges sont très robustes et présentent un certain nombre d'avantages par rapport à des jauges à ionisation par cathode chaude (par exemple les jauges Bayard-Alpert pourvues de filaments), elles présentent néanmoins le défaut de ne pas pouvoir être systématiquement réamorcées à très basse pression. Par exemple pour les jauges à structure Penning, si la pression est plus basse que (ou de l'ordre de) 10⁻⁸ mbar, certaines jauges ne se réamorcent pas spontanément à l'établissement de la haute tension d'anode, si bien que le courant électronique (ou ionique) mesuré dont la valeur devrait être l'image de la pression est extrêmement faible et ne reflète plus la valeur réelle de la pression dans la chambre à vide : la mesure est donc fausse et si un asservissement est lié à cette mesure, il en résulte une anomalie de fonctionnement. A plus basse pression (10⁻⁹ mbar et plus bas), les jauges magnétron inversé présentent le même défaut et un réamorçage peut prendre plusieurs heures. Ce demier se manifeste en général de manière aléatoire ; il est quelquefois généré sous l'influence d'un rayon cosmique. La raison exacte du non amorçage de certaines jauges apparemment de même structure n'est pas bien connue.

Pour pallier cet inconvénient, plusieurs stratagèmes ou dispositifs ont été ou sont employés pour permettre un amorçage de la jauge :
- si l'opérateur peut se rapprocher de la chambre à vide reliée à la jauge, un choc de la chambre ou de la jauge avec une petite masse permet en général le réamorçage grâce à une augmentation momentanée du dégazage conduisant à une courte remontée de pression ;
- certaines anodes sont recouvertes d'oxyde de thorium, matériau qui émet des particules alpha propices à l'ionisation et donc au réamorçage de la décharge (voir référence [2]) ;
- une photocathode est installée à proximité de l'anode et reçoit de la lumière au moment adéquat afin d'émettre par effet photoélectrique un courant électronique qui va amorcer la décharge ;
- un filament est installé à proximité de l'anode : en faisant passer un courant dans celui-ci, un échauffement local se produit, donc une désorption, suivie d'une remontée de pression suffisante pour amorcer la décharge (voir référence [3]). Eventuellement, si la polarisation du filament par rapport à l'enceinte qui le contient et à l'anode est correcte, le filament peut, par émission thermoélectronique, émettre quelques électrons qui initient aussi la décharge souhaitée ;
- une lampe à décharge ultraviolette est installée à proximité de la jauge. L'allumage de celle-ci engendre la création de photons ultraviolets qui, en frappant la cathode, conduisent à l'émission d'électrons par effet photoélectrique, et donc entraînent l'amorce de la décharge (voir référence [4]) ;
- enfin, une électrode en forme de pointe peut être insérée à proximité de l'anode afin de foumir par effet de champ (à haute tension) un arc initiateur (voir référence [2]).

Certains de ces dispositifs ont été aussi utilisés en mode continu pour assurer le maintien de la décharge dans des jauges fonctionnant sur le même principe (à savoir des jauges dans lesquelles l'utilisation de champs électrique et magnétique augmente la longueur des trajectoires électroniques), mais dans lesquelles l'ionisation n'était que semi-autonome. Ces jauges ne sont pas actuellement sur le marché.

Le problème posé est donc que les jauges à cathode froide ne peuvent être systématiquement réamorcées à très basse pression, aussi ces jauges nécessitent des moyens supplémentaires tels qu'un filament, une lampe à décharge en ultraviolet... etc pour assurer ce réamorçage. Tous ces moyens présentent respectivement un certain nombre d'inconvénients et en particulier une absence de fiabilité totale.

Pour pallier les inconvénients des jauges à cathodes froides de l'art antérieur, le dispositif de l'invention a pour objet une jauge à vide à cathode froide susceptible, en toute fiabilité, d'être réamorcée ou maintenue, quel que soit le degré de vide dont on cherche à déterminer la valeur.

### Exposé de l'invention

La présente invention propose un dispositif d'amorçage et/ou de maintien d'une décharge apte à être disposé dans une enceinte à l'intérieur de laquelle se trouve une zone de décharge confinée par un champ électromagnétique. Ce dispositif est caractérisé en ce qu'il comporte une source d'électrons à micropointes disposée à proximité de ladite zone et des moyens de polarisation de la source de façon à ce qu'elle émette des électrons vers la zone de décharge afin d'amorcer et/ou maintenir ladite décharge.

Dans une réalisation avantageuse l'enceinte est celle d'une jauge à vide à cathode froide dans laquelle est disposée une anode entourée par une cathode, des moyens de polarisation de la cathode, de l'anode et de l'enceinte étant en outre prévus, ainsi que des moyens de mesure du vide par la mesure des courants parcourant la cathode et/ou l'anode.

Les moyens de polarisation du dispositif d'amorçage et/ou de maintien comportent un moyen de commande pour appliquer ou interrompre la polarisation de la grille et des micropointes de la source. Ce moyen de commande est généralement constitué par un interrupteur qui, s'il est fermé, permet d'appliquer une différence de potentiel ente la grille et les micropointes et s'il est ouvert, permet de supprimer cette différence de potentiel. Ce moyen de commande peut également être réalisé par un couplage optique qui permet de mettre en, ou hors, circuit les moyens de polarisation de la source à micropointes.

Le moyen de commande peut assurer la polarisation de la grille et des micropointes de la source avant la mesure du vide foumies par la jauge afin d'amorcer celle-ci. Ce type de fonctionnement qui permet uniquement l'amorçage de la décharge (l'interrupteur étant ouvert pendant la mesure du vide) est appelé "fonctionnement impulsionnel" des moyens d'amorçage.

Le moyen de commande peut assurer la polarisation de la grille et des micropointes pendant la mesure du vide foumie par la jauge afin d'assurer la maintien de la décharge. Ce type de fonctionnement qui correspond à l'utilisation de l'interrupteur en position fermée pendant la mesure du vide est appelé "fonctionnement continu" des moyens d'amorçage et/ou de maintien.

Les moyens de polarisation du dispositif d'amorçage et/ou de maintien appliquent à la grille de la source un potentiel égal ou voisin de celui de l'enceinte. Généralement ce potentiel est celui de la masse.

Le dispositif d'amorçage et/ou de maintien de l'invention est directionnel du fait de l'utilisation d'une source d'électrons à micropointes. De ce fait il peut être placé aussi bien à proximité que de façon éloignée de la zone de décharge de l'enceinte. Cette particularité permet de disposer le dispositif d'amorçage et/ou de maintien avec un très grand degré de liberté dans l'enceinte.

Avantageusement le dispositif de l'invention comprend un circuit automatique pour l'amorçage et/ou le maintien qui comporte un comparateur dont une des entrées est reliée à une tension de référence. L'autre entrée est reliée à une sortie en tension des moyens de mesure de la jauge, la sortie de ce comparateur étant reliée aux moyens de polarisation de la source par l'intermédiaire du circuit de déclenchement réagissant sur un état donné ou à un changement d'état du comparateur (par exemple sur un front de montée).

Dans le cas d'un fonctionnement de type impulsionnel le circuit de déclenchement génère une impulsion, alors que dans le cas d'un fonctionnement de type maintien le circuit de déclenchement génère un signal continu.

Un tel dispositif d'amorçage et/ou de maintien assure une fiabilité totale pour le fonctionnement de la jauge et peut trouver sa place dans toute installation industrielle où les processus dépendent des mesures foumies par la jauge et déterminent par exemple ainsi la mise en fonctionnement d'autres appareils (ouverture de vannes, mise en marche d'appareils, etc..). Il peut être adjoint à la plupart des jauges à cathodes froides déjà installées.

Certaines jauges, fonctionnant sur le même principe mais ayant des structures différentes, nécessitent la présence continuelle d'un très faible courant de maintien car la décharge n'est pas autonome mais semi-autonome. Ce courant inférieur au picoampère peut être foumi par le dispositif de l'invention polarisé alors en continu.

A la différence de toutes les applications des sources d'électrons à cathode à micropointes connues à ce jour, la cathode ne fonctionne plus pendant que l'on fait la mesure dans le cas du fonctionnement de type impulsionnel. Ce cas est différent de celui des écrans fluorescents à micropointes que l'on regarde pendant que la cathode à micropointes émet, ou des applications en hyperfréquence dans lesquelles l'amplification se fait pendant que la cathode à micropointes émet, etc.. Dans cette application, la cathode amorce une réaction, puis son rôle est terminé au bout de deux secondes approximativement. C'est alors que le résultat de son action est pris en compte.

La jauge de l'invention présente de nombreux avantages par rapport aux dispositifs de l'art connu :
- L'avantage d'utiliser une cathode à micropointes par rapport à l'anode recouverte d'émetteur alpha est l'absence de contamination radioactive dans les enceintes.
- L'avantage d'utiliser une cathode à micropointes par rapport au filament est d'une part la robustesse, d'autre part l'absence de dégazage (donc de dégradation de la pression que l'on va mesurer), puisqu'il n'y a pas d'échauffement. Si l'on désirait extraire un faisceau d'électrons par émission thermoélectronique à partir d'un filament, il est indispensable soit de polariser négativement le filament par rapport aux enceintes (et l'on perd la presque totalité du faisceau sur l'enceinte), soit de rapprocher le filament très près de l'anode car les électrons sont émis avec une vitesse nulle à partir du filament et ne sont donc pas extraits en l'absence d'un champs électrique attracteur.
- l'avantage d'utiliser une cathode à micropointes par rapport à la lampe à décharge est difficile à apprécier. D'après les références citées en fin de description on peut noter que le temps d'amorçage n'est pas instantané comme avec les micropointes (trois secondes à 10⁻⁸ mbar ou trois minutes à 10⁻¹⁰ mbar) : de plus ce système peut créer de la lumière parasite en ultraviolet dans la chambre à vide (lumière pouvant être gênante dans un ESCA ("Electron Spectroscope for Chemical Analysis" ou spectroscope électronique pour analyses chimiques), un spectromètre optique sous vide, etc..) et il n'est pas étuvable, si bien qu'il doit être enlevé durant les étuvages et remis après coup, ce qui nécessite l'intervention d'un opérateur.
- L'avantage d'utiliser une cathode à micropointes par rapport à la photocathode est que d'une part il n'est pas nécessaire que la cathode à micropointes demeure dans l'obscurité et que, d'autre part, sa surface est beaucoup moins sensible au vide résiduel et aux éventuelles pollutions que celle d'une photocathode. De plus, les photocathodes ne sont en général pas étuvables à hautes températures (étuvage à 400°C pour l'ultravide), ce qui n'est pas le cas des cathodes à micropointes.
- L'avantage d'utiliser une cathode à micropointes par rapport aux pointes macroscopiques situées sur (ou à proximité de) l'anode réside dans la fiabilité du dispositif à micropointes qui est de 100%, alors qu'avec les macropointes (système commercialisé chez Balzers) l'amorçage ne se fait pratiquement jamais à très basse pression.
- Enfin le fait que les courants extraits de la cathode à micropointes soient très faibles et très brefs laisse supposer une durée de vie quasi illimitée pour le fonctionnement de la cathode à micropointes dans cette application.

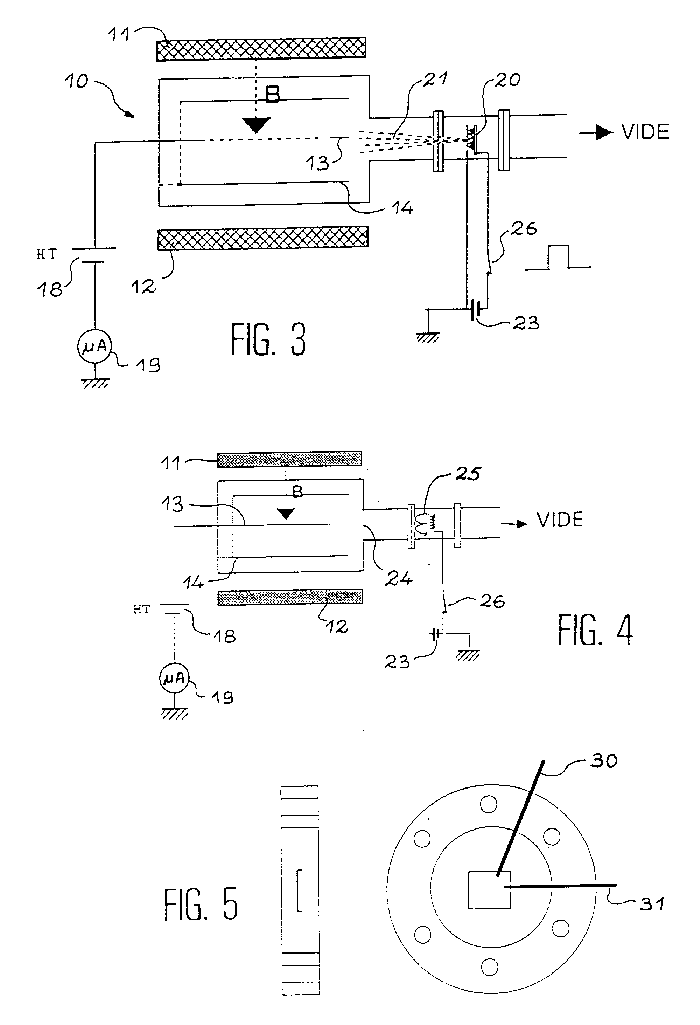

Le prix d'un tel dispositif d'amorçage comprend celui de la bride et de ses deux passages électriques tels que représentés sur la figure 5, celui de la cathode à micropointes et du système de fixation de celle-ci et celui de l'alimentation électrique. Cette dernière, même en lui adjoignant un circuit logique de comparaison, est très élémentaire. Elle ne nécessite ni fort courant, ni haute tension. Le prix de revient de l'ensemble devrait être d'un faible coût.

### Brève description des dessins

- La figure 1 illustre une jauge de type Penning ;
- la figure 2 illustre une jauge selon l'invention ;
- la figure 3 illustre également une jauge selon l'invention ;
- la figure 4 illustre la jauge de l'invention avec une cathode mal polarisée ;
- la figure 5 illustre une bride double face munie de contacts pour la cathode à micropointes ;
- la figure 6 illustre le schéma électrique d'un circuit automatique pour l'amorçage ;
- les figures 7 et 8 illustrent la difficulté d'amorçage à l'aide d'un filament ;
- la figure 9 illustre une disposition expérimentale pour tester la procédure d'amorçage.

### Exposé détaillé de modes de réalisation

La description qui suit est donnée dans le cadre de l'application du dispositif de l'invention à une jauge à vide, étant bien entendu, comme on l'a vu précédemment, que l'invention peut s'appliquer à d'autres dispositifs utilisant une décharge.

La jauge à vide à cathode froide de l'invention, illustrée à la figure 2, est par exemple une jauge de type Penning comportant dans une enceinte 16 une anode 13 entourée par une cathode 14, un moyen d'amorçage et/ou de maintien de décharge, des premiers moyens de polarisation de la cathode (qui est généralement à la masse), de l'anode (HT) et de l'enceinte (généralement à la masse également) et des moyens magnétiques (aimants 11 et 12) à l'extérieur de l'enceinte 16. Ladite enceinte comporte en outre un moyen de raccordement tel qu'une bride 17 apte à être connectée à une chambre à vide dont on veut mesurer le vide. Le moyen d'amorçage et/ou de maintien comporte une source d'électrons à micropointes 20 placée à proximité du moyen de raccordement (ie avant ou après) et des deuxièmes moyens de polarisation 23 aptes à porter une grille d'extraction 22 et les micropointes de la source à des potentiels tels qu'il y ait une émission d'électrons soit de façon impulsionnelle, soit de façon continue vers la zone de décharge de l'enceinte 16.

Comme représenté sur cette figure 2, la cathode à micropointes 20, placée à proximité de la zone de décharge est susceptible d'émettre un courant électronique 21 en direction de la zone de décharge, au travers de la grille d'extraction 22, suffisant pour amorcer la décharge ou maintenir une décharge semi-autonome.

Les valeurs typiques d'un montage expérimental (dont certaines sont surdimensionnées) sont par exemple les suivantes :
- zone émissive de la cathode : 20 mm² comprenant 400 000 pointes ;
- tension de polarisation grille-pointe : trente à cinquante volts (courant émis inférieur ou de l'ordre de quelques nanoampères dépendant de la qualité émissive des pointes) ;
- durée de l'impulsion : une à deux secondes pour le réamorçage (ou régime continu à très faible tension (de l'ordre de vingt à trente volts) de polarisation pour le maintien).

Dans ce montage illustré à la figure 2, les pointes sont polarisées à la masse (potentiel de l'enceinte). Pour que les électrons atteignent la région de la décharge proche de l'anode, il faut que d'une part l'énergie cinétique conférée aux électrons soit suffisante et que, d'autre part, ces électrons n'aient pas un "col" de potentiel à zéro volt à franchir sur leur chemin, sinon ils rebrousseraient chemin vers la grille. Il peut ne pas y avoir de col si la cathode à micropointes est suffisamment proche de l'anode de façon que le potentiel décroisse de l'anode à la grille d'extraction de la cathode sans passer par des valeurs égales ou inférieures à zéro volt. Si nécessaire, et ce sera en général la majorité des cas pratiques puisque la cathode à micropointes sera souvent à une certaine distance de l'anode et qu'il y aura un col à zéro volt (produit par la proximité des parois de l'enceinte à vide), il faudra polariser la cathode en portant la grille à la masse tout en conservant une différence de potentiel de trente à cinquante volts entre grille et pointes, comme représenté sur la figure 3.

Par rapport à la figure 2, la figure 3 correspond à l'utilisation de la source d'électrons à micropointes de façon éloignée de la zone de décharge, cette source étant polarisée différemment pour en tenir compte, i.e. la grille est à un potentiel inférieur ou égal à celui de l'enceinte (qui est dans le cas de la figure la masse).

Dans ce cas, et même si l'anode est écrantée vis-à-vis de la cathode par un potentiel nul, le faisceau issu des pointes atteint la zone même de décharge. Avec un tel dispositif d'amorçage, quelle que soit la pression (même basse) dans l'enceinte, il a été possible expérimentalement de réamorcer une jauge de type Penning ou une jauge magnétron inversé dans les secondes qui ont suivi la mise en marche. Dans des conditions de vide où le réamorçage spontané peut prendre plusieurs minutes, voire des délais de l'ordre de l'heure, l'amorçage induit par faisceau électronique issu de la cathode a été automatique avec une fiabilité de 100 % des cas dans les secondes ayant suivi l'application de l'impulsion d'électrons. Le nombre d'amorçages spontanés, sans l'utilisation du dispositif d'amorçage de l'invention était de quelques unités pour un total d'amorçages provoqués de plusieurs centaines.

Actuellement, il semble que toutes les jauges vendues sur le marché fonctionnent après avoir été amorçées correctement sans se désamorcer, même si la pression est plus basse que la valeur minimale de la gamme qu'elles sont censées mesurer. Toutefois, si tel n'était pas le cas, la jauge de l'invention permet de maintenir la décharge de deux manières :
- la première consiste à envoyer une impulsion d'électrons à une fréquence déterminée (par exemple toutes les heures) et vérifier que la pression mesurée est bien celle régnant dans l'enceinte juste avant l'arrivée de l'impulsion ;
- la deuxième consiste à envoyer de façon continue un faible courant électronique (de l'ordre de quelques femtoampéres pour une jauge mesurant des vides de 10⁻¹⁰ mbar), en polarisant la cathode aux alentours de 15 à 30 volts. Dans ce cas, le courant de maintien est largement inférieur au courant électronique généré par la décharge et ne perturbe donc ni celle-ci, ni la mesure. Cet ordre de grandeur du courant de maintien doit bien sûr être ajusté en fonction du type de jauge et des propriétés émissives de la cathode à micropointes de façon à ne pas perturber la mesure.

Si on ne prend aucune précaution pour les polarisations par exemple avec les pointes à la masse et trop éloignées de la jauge, on obtient le cas de la figure 4. On a une région de potentiel nul 24 et un retour d'électrons sur la grille 25.

Par ailleurs si l'enceinte à vide n'est pas à la masse, il faut bien sûr polariser la cathode en conséquence.

Dans le cas d'une alimentation continue de la jauge, pour le maintien de la décharge, il suffit de polariser en continu à environ quinze à trente volts la grille de la cathode par rapport aux pointes pour générer le courant utile (la grille étant bien sûr à la masse si la cathode à micropointes est en position éloignée).

Une alimentation de cathode est indispensable pour ce dispositif. Dans une version minimale, l'opérateur peut, lorsqu'il a un doute sur le bon fonctionnement de la jauge (qui indique une pression très faible soit parce que c'est réellement le cas, soit parce que le réamorçage de la jauge n'a pas eu lieu), fermer l'interrupteur du circuit de cathode durant un bref instant. A ce moment là, l'indication de pression "remonte" à cause du courant électronique qui pénètre dans l'anode. Lorsque l'impulsion d'électrons est finie (une à deux secondes après), l'opérateur peut alors relire la valeur de la pression. Soit cette valeur est la même qu'avant l'impulsion, ce qui signifie que la jauge était amorcée et la pression effectivement basse, soit la valeur a changé, ce qui signifie que l'amorçage a eu lieu entre temps et la vraie valeur à prendre en compte est alors cette demière. Dans une version plus élaborée de l'électronique un circuit électronique compare, un instant après la mise en marche, la pression dans l'enceinte à une valeur de référence et si la pression mesurée est plus faible, le circuit logique envoie alors une impulsion sur l'alimentation de cathode, ce qui génère un faible courant électronique durant un bref instant pour éventuellement réamorcer la jauge. Dans le cas du maintien, il suffit d'appliquer en continu les polarisations sur les deux électrodes de la cathode.

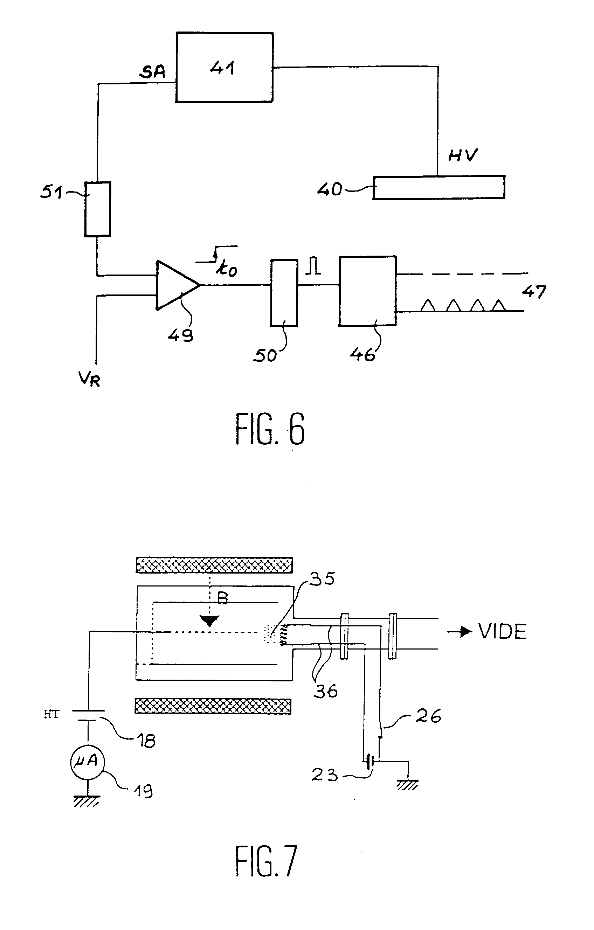

Ainsi comme illustré sur la figure 6 ce circuit automatique pour l'amorçage comprend un comparateur 49 dont une des entrées est reliée au contrôleur 41 (qui comporte les moyens de polarisation 18 de la jauge ainsi que les moyens de mesure 19), d'une jauge à cathode froide 40 au travers d'un circuit délai 51, et dont l'autre entrée a une tension de référence VR (correspondant à une pression de référence P) réglée par l'opérateur, la sortie de ce comparateur 49 étant reliée aux moyens de polarisation ou à l'alimentation 46 de la cathode micropointes 47 au travers d'un circuit 50 de déclenchement. Ce circuit de déclenchement envoie un signal aux moyens d'alimentation lorsque la sortie du comparateur bascule entre deux états ou prend un état déterminé. Ce signal est soit impulsionnel dans le cas d'un fonctionnement impulsionnel, soit continu dans le cas d'un fonctionnement de type maintien.

A titre d'exemple on a ainsi le fonctionnement suivant : à l'allumage du contrôleur 41, la sortie analogique SA indique une tension (en V) proportionnelle ou fonction de P. Si cette valeur est supérieure à VR, la sortie du comparateur 49 est à la valeur basse. Si ce n'est pas le cas, il y a un instant to, une transition vers la valeur haute. Le circuit de déclenchement 50 réagissant sur le front de montée envoie une impulsion à l'alimentation 46 qui la répercute sur la cathode 47.

L'idée de réamorcer une jauge à cathode froide grâce à un dispositif annexe n'est pas neuve, de même que l'idée d'entretenir la décharge grâce à un moyen auxiliaire. Par ailleurs, l'idée d'utiliser une cathode à micropointes à la place du filament dans une jauge à vide à cathode chaude existe déjà.

Par contre l'idée d'utiliser une cathode à micropointes pour résoudre le problème des jauges à ionisation à cathode froide (Penning et Magnétron ou Magnétron inversée) n'a pas été exploitée. Pour l'homme de l'art l'association de ces deux idées (remplacement "d'un filament de réamorçage" par une cathode à micropointes dans une jauge de type Penning) n'est pas triviale : en effet, pour des raisons d'encombrement, éventuellement de possibilité de remplacement de ce filament, il n'est pas aisé d'incorporer celui-ci dans le corps de la jauge avec des passages électriques sur la jauge elle-même. Il en serait probablement de même avec une cathode à micropointes. Il apparaît donc naturel de déporter les passages électriques du système d'amorçage à l'extérieur de la jauge, par exemple sur une bride intermédiaire comme cela est dessiné sur les figures 2 et 3. Dans ces conditions, avec un filament déporté, il devient difficile d'envoyer des électrons vers la zone de décharge. Dans ce cas, on peut présumer que la raison majeure de l'amorçage est due à la remontée de pression dans l'enceinte à cause de l'échauffement du filament, et non pas due à la présence d'un nuage électronique dans la jauge.

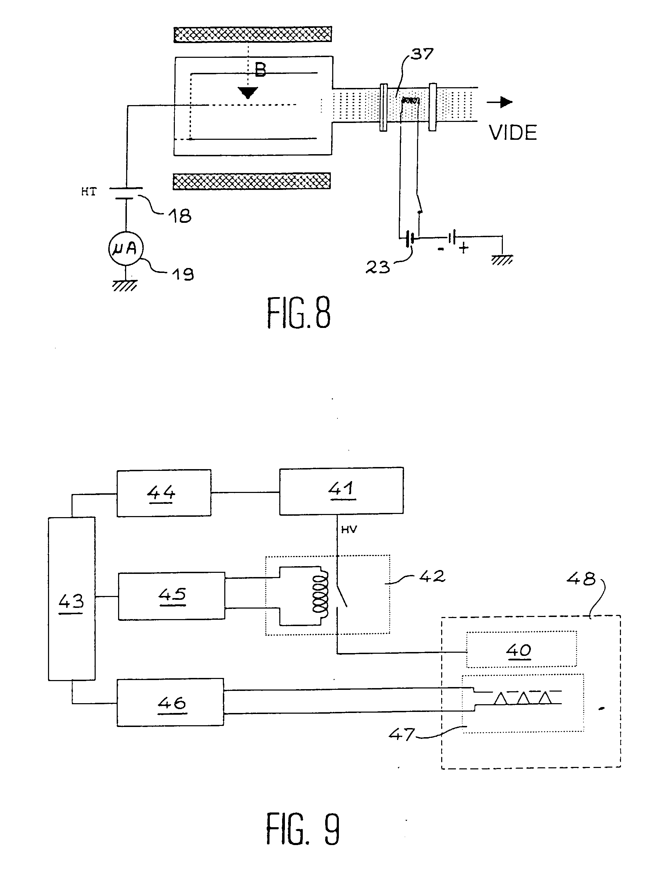

Si l'on voulait utiliser un filament pour initier la décharge dans une jauge de type Penning ou plus généralement dans une jauge à cathode froide, plusieurs solutions s'offriraient a priori à l'opérateur :
**1/** On place le filament au plus près de l'anode (quelques millimètres), comme repésenté sur la figure 7. Une alimentation (quelques volts, quelques ampères) est placée aux bomes du filament. Une des bomes du filament est par exemple reliée à la masse (c'est-à-dire la référence de tension de l'installation et en particulier l'enceinte). Lorsque le filament est chauffé, une émission thermoélectronique peut être générée si le potentiel appliqué à l'anode est suffisant pour attirer le nuage électronique 35 situé autour du filament. Dans ce cas l'amorçage a lieu. De plus, il est fort probable qu'en s'échauffant le filament va désorber légèrement, ce qui localement augmentera la pression et sera peut être suffisant pour l'amorçage. Donc en ayant le filament à proximité de l'anode, ce qui implique soit d'intégrer le filament à la jauge, soit de disposer de tiges 36 assez longues et rigides pour le rapprocher suffisamment de la haute tension, on peut à coup sûr espérer amorcer la jauge quelle que soit la pression de départ. Mais le montage mécanique est délicat : fragilité du filament, éventuellement source de dégazage à l'allumage dégradant la qualité du vide.
**2/** On place le filament au dehors de la jauge, à quelques centimètres de celle-ci, comme représenté sur la figure 8. A ce moment là, il devient difficile d'extraire les électrons du filament et de les diriger vers l'anode. En effet, si l'on suppose comme en 1/ qu'une des bomes du filament est à la masse (comme l'enceinte), le champ électrique au niveau du filament est quasiment nul, si bien qu'aucun électron n'est attiré vers la zone de décharge. On peut, pour remédier à cette situation, polariser négativement une des bomes. Dans ce cas la majeure partie des électrons 37 émis ira sur les parois de l'enceinte (ce qui provoquera une augmentation de pression par désorption sous impact électronique) et une autre partie ira vers la zone de décharge. Le rapport des quantités allant respectivement sur l'enceinte et dans la zone d'ionisation correspond en gros au rapport des angles solides sous lesquels, depuis le filament, on voit l'enceinte et la zone de décharge. Si ce rapport est faible, il faut chauffer "fort" pour avoir quelques chances d'envoyer des électrons vers l'anode. Mais il faut deux alimentations : une pour le chauffage et une autre pour la polarisation. De plus l'amorçage se fait grâce aux électrons, mais aussi à cause du dégazage.

Compte tenu des considérations précédentes, il n'est pas évident en plaçant une source d'électrons peu intense (cathode à micropointes) et à distance non négligeable (quelques centimètres ou en tous cas de façon éloignée de la zone de décharge) que l'on puisse recueillir les électrons dans la zone de décharge. Pour ce faire, un certain nombre de conditions doivent être respectées :
- la cathode doit tirer dans la direction de la jauge ;
- le potentiel "vu" par les électrons entre la grille d'extraction et la zone de décharge ne doit pas repousser ceux-ci. En effet, compte-tenu de la valeur de l'énergie cinétique des électrons émis, qui est approximativement égale à la différence entre la tension d'extraction et la tension appliquée aux pointes (multipliée par la valeur de la charge électronique), on constate que :
   - si la cathode est éloignée de la zone de décharge (ce qui n'est pas obligatoire mais peut être commode pour les clients qui ont déjà une jauge et voudraient acquérir un dispositif d'amorçage),
   - si l'enceinte est à la masse (cas le plus fréquent),
   - si les pointes sont à la masse et la grille d'extraction positive ;
alors, il y a de fortes chances pour que la plupart des électrons reviennent sur la grille et n'atteignent donc jamais la zone de décharge, comme représenté sur la figure 4. Dans cette configuration, on peut bien sûr choisir de générer un courant intense afin de créer une remontée locale de pression suffisante pour l'amorçage. Toutefois, en général les physiciens préfèrent ne pas dégrader l'ultravide qu'ils ont obtenu difficilement.

Selon l'invention, l'instrumentaliste connecte donc la grille d'extraction à la masse afin que le faisceau issu de la cathode "avance" jusqu'à la zone d'amorçage. Ce type de polarisation n'est pas évident a priori car la cathode fonctionne ici pratiquement comme une diode puisque l'anode de la jauge (à la haute tension) est cachée de la grille d'extraction par un rideau de potentiel à la masse.

L'invention consiste donc à polariser judicieusement une cathode à micropointes (placée en général assez loin de la zone de décharge) afin qu'un nombre suffisant d'électrons atteigne le volume intérieur de ladite jauge. Le choix conjugué d'une cathode comme source directive d'électrons et de polarisation adéquate évite de jouer sur le double tableau "émission d'électrons + production de dégazage local" pour amorcer la jauge. Dans le cas présent, un courant crête de l'ordre de quelques nA pendant une à deux secondes amorce automatiquement une jauge à cathode froide, quel que soit le niveau de vide à mesurer si celui-ci correspond au domaine de mesure de la jauge.

La figure 5 donne un exemple de montage de la cathode à micropointes sur une bride ultravide, par exemple une bride double face type CF35 munie de contacts pour la cathode à micropointes : c'est-à-dire les contacts pointes 30 et les contacts grilles 31. Si l'enceinte est à la masse, on peut relier directement la grille d'extraction à l'enceinte, ce qui supprime un passage électrique et diminue d'autant le prix de la bride.

La jauge de l'invention a été soumise à des essais pour mettre en évidence ses caractéristiques avantageuses.

La figure 2 représente la station de test pour la jauge à cathode froide munie du dispositif d'amorçage à micropointes. Elle comprend une chambre à vide dans laquelle un vide de 2 x 10⁻¹⁰ mbar peut être atteint. Cette chambre peut être pompée par une pompe turbomoléculaire. La pression est mesurée par la jauge à cathode froide à tester. La cathode à micropointes (le dispositif d'amorçage) est insérée entre la jauge et la chambre. Elle est située à 20 mm de la jauge et dirige son faisceau d'électrons vers l'entrée de la jauge. Comme la chambre à vide est au potentiel de la terre, la grille de la cathode est aussi polarisée à zéro volt. Quant une impulsion négative est appliquée aux pointes, par exemple -40 volts, des électrons sont émis par la cathode. Ils peuvent atteindre chaque partie située devant eux et en particulier la région proche de l'anode de la jauge où l'ionisation prend place. Comme l'énergie cinétique électronique est faible (environ 40 eV), l'influence du champ magnétique sur les trajectoires des électrons est importante. Pour cette raison, deux types de jauges ont été considérées, où les configurations de champ magnétique sont différentes, de façon à voir si le paquet d'électrons émis peut atteindre la zone de décharge et produire une ionisation nécessaire pour démarrer la jauge. La première jauge est une jauge à plasma double de type Penning (modèle CF2P Alcatel-CIT, F 74009 Annecy Cedex). Sa gamme de mesure est de 10⁻³ mbar à 10⁻⁸ mbar. La jauge est assemblée avec des brides Pneurop KF. La seconde jauge (Balzers) est une jauge à magnétron inversée, qui peut fonctionner jusqu'à 1x10⁻¹¹ mbar (modèle triaxal, Balzers Aktiengesellshaft FL - 9496 Balzers). La jauge a son propre petit dispositif d'amorçage fait d'aiguilles macroscopiques sur l'anode. On a testé sa capacité à démarrer seule ou avec l'aide de la cathode micropointe à trois pressions : 10⁻⁸ mbar, 10⁻⁹ mbar et 5 x 10⁻¹⁰ mbar. La jauge est adaptée avec une bride CF35 et un connecteur triaxial. Un schéma de montage de diagnostic est représenté sur la figure 9. La jauge à cathode froide 40 (Penning ou Balzers) est connectée à son contrôleur 41 au moyen d'un relais 42 à contacts scellés haute tension. Un ordinateur 43 est relié d'une part à un voltmètre 44 relié au contrôleur 41, d'autre part à une première alimentation électrique 45 reliée au relais 42, et enfin à une seconde alimentation de tension 46 reliée à la cathode à micropointes 47 ; la jauge 40 et la cathode étant situées dans une chambre à vide 48. Quand le relais est fermé, la haute tension (classiquement de 2500 volts à 3500 volts) est appliquée à l'anode de la jauge. L'ordinateur 43 peut alors lire la valeur de tension donnée par le contrôleur qui est une mesure de pression indiquée par la jauge. Si cette valeur ne correspond pas à la valeur réelle espérée de la pression (c'est-à-dire que le courant électronique détecté est trop petit), cela signifie que la décharge n'a pas encore eu lieu : l'indication donnée par le contrôleur est "pression très faible ou nulle". L'ordinateur envoie alors une tension d'impulsion V à la cathode à travers l'alimentation de tension pendant une ou deux secondes et lit, une courte période après, la tension de sortie du contrôleur afin de voir si la décharge a eu lieu ; sinon, une seconde impulsion d'amplitude V + 5 volts est envoyée à la cathode et ainsi de suite.... Lorsque l'amorçage a eu lieu, le contrôleur affiche la vraie valeur et foumit au voltmètre 44 une valeur de tension "correcte" qui est alors prise en compte par l'ordinateur 43. Pour la sonde de magnétron inversée, une petite modification de la disposition expérimentale de la figure 9 a été réalisée. Quand le relais foumissant la haute tension à l'anode était en position ouverte, il était nécessaire de mettre l'anode à la terre de manière à arrêter la décharge qui pouvait avoir lieu autrement pendant une longue durée et aurait été encore établie lors de la fermeture du relais une heure après.

Le tableau 1, en fin de description, donne le nombre relatif d'amorçages réussis (automatiques et assistés) à une pression de 4 x 10⁻⁹ mbar pour une jauge Penning. ll est évident qu'en utilisant une impulsion d'électrons (pendant environ une seconde) cette jauge peut être mise en oeuvre avec une complète fiabilité.

Pour la seconde jauge la durée d'impulsion a été augmentée à environ deux secondes. Ces mesures de test pour voir si le démarrage de la jauge était réalisé, ont eu lieu au moins trente secondes après la fermeture du relais ou après l'application de l'impulsion sur la cathode (pour tenir compte des constantes de temps du contrôleur). Le tableau 2 donne le résultat obtenu.

A partir des résultats obtenus, il est clair que la cathode à micropointes est un dispositif parfait pour amorcer la décharge dans un capteur à cathode froide. La cathode à micropointes actuelle a une surface de 20 mm² et est normalement utilisée dans d'autres applications avec des tensions d'environ 50 volts à 80 volts. Le courant émis alors est de l'ordre du mA. Dans la présente application le courant émis est situé dans la gamme des nA ou µA.

Dans de telles conditions il est évident que même si la quantité d'électrons nécessaires pour l'amorçage devait être augmentée (par exemple dans une autre géométrie de jauge, ou pour une pression inférieure à 10⁻¹⁰ mbar), on a largement la possibilité d'augmenter la tension d'extraction. On peut de plus rappeler que dans l'air, une tension constante de 30 volts appliquée à la cathode n'affecte pas de manière apparente, par la suite, ses propriétés émissives dans le vide, ce qui prouve qu'en cas de fausse manoeuvre la cathode reste efficace.

Tous les matériaux utilisés pour la cathode sont compatibles UHV (ultra-haut vide), et la cathode, à présent sur un substrat en verre, peut être étuvée à 400°C environ. D'autres substrats tels que le silicium pourraient être utilisés si nécessaire pour augmenter cette température d'étuvage. De nombreuses expériences avec des cathodes fonctionnant en présence de gaz montrent que pour de telles opérations courtes (une ou deux secondes à environ 45 volts) la durée de vie de la cathode est de plusieurs années. En outre, avec ce type d'amorçage, il apparaît que le démarrage est immédiat (quelques secondes), la durée de démarrage apparaît être indépendante du niveau de pression pour des pressions entre 1.10⁻⁹ mbar et 5. 10⁻¹⁰ mbar. Bien que le contrôle de l'amorçage soit fait une ou plusieurs minutes après l'application de l'impulsion sur la cathode (pour être sûr que l'ionisation ne se termine pas entre temps), on pourrait vérifier que cet amorçage a eu lieu seulement quelques secondes après l'impulsion ( cinq à dix secondes). La situation est donc différente du cas d'amorçage par utilisation de l'effet photoélectrique (trois minutes à 10⁻¹⁰ mbar).

L'augmentation de pression due à la commutation de la cathode à micropointes est négligeable à cause de la très faible valeur du courant extrait (par comparaison dans une jauge Bayard-Alpert typique, le courant émis par un filament est de l'ordre d'un mA).

Ainsi grâce à l'utilisation d'une cathode à micropointes située au plus près mais éventuellement située à quelques centimètres d'une jauge à cathode froide, il est possible de démarrer avec une complète fiabilité la décharge dans le capteur nécessaire à la lecture de la pression quel que soit le niveau de pression. Comme le dispositif nécessite seulement une impulsion d'environ 30-50 volts durant une ou deux secondes sans puissance, ce démarreur devrait trouver des applications soit dans l'industrie (par exemple micro-électronique) où la fiabilité est un facteur important, soit dans les grands instruments où toute la commande de mesure des pressions est complètement automatique, ainsi que dans quelques cas où les jauges doivent être mises hors circuit pendant un certain temps. Le prix du dispositif complet est essentiellement déterminé par le prix de la bride équipée avec une ou deux traversées électriques. Car il est probable que, avec le développement des écrans plats émissifs à effet de champ, le prix de la cathode va atteindre de faibles valeurs dans un futur très proche.

**Tableau 1 :**

| nombre relatif de tentative pour démarrer la jauge Penning | | | | | | |
|---|---|---|---|---|---|---|
| Pression | Nombre total de tentatives | Amorçage direct | Amorçage assisté 35 V | Amorçage assisté 40 V | Amorçage assisté 45 V | Amorçage assisté (total) |
| 4.10⁻⁸ mbar | 500 | 35 | 131 | 321 | 13 | 465 |

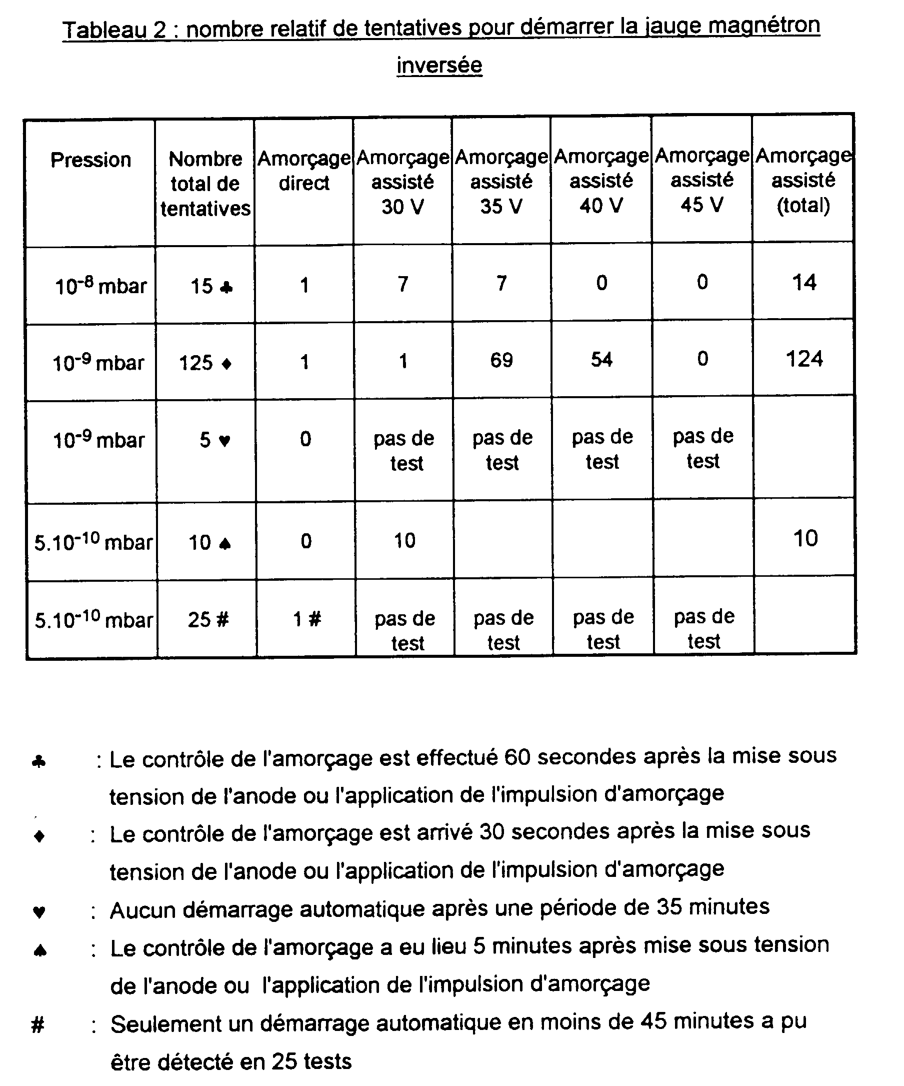

### REFERENCES

[1] "L'ultra-vide et ses applications" de R.W. Roberts et T.A. Vanderslice (Dunod, Paris 1967, pages 38-40)
[2] "Principles of Vacuum Engineering" de M. Pirani et J. Yarwood (Chapman and Hall, Londres 1963, pages 123-126)
[3] "The Physical Principles of Ultra-High Vacuum, Systems and Equipment" de N.W. Robinson (Charpman and Hall, Londres 1968, pages 28-30)
[4] Documentation MKS Instruments Inc : "Ignitorr™ Cold Cathode Tube Starting Device" (Août 1992)

## Revendications

1. Dispositif d'amorçage et/ou de maintien d'une décharge apte à être disposé dans une enceinte (16) à l'intérieur de laquelle se trouve une zone de décharge confinée par un champ électromagnétique, ce dispositif étant caractérisé en ce qu'il comporte une source d'électrons à micropointes (20) disposée à proximité de ladite zone et des moyens de polarisation (23) de la source (20) de façon à ce qu'elle émette des électrons vers la zone de décharge afin d'amorcer et/ou maintenir ladite décharge.

2. Jauge à vide à cathode froide comportant un dispositif selon la revendication 1, caractérisée en ce qu'elle comprend une anode (13) entourée par une cathode (14) disposées dans l'enceinte (16), des moyens de polarisation (18) de la cathode, de l'anode et de l'enceinte, ainsi que des moyens de mesure (19) du vide par la mesure des courants parcourant la cathode et/ou l'anode.

3. Dispositif selon la revendication 1, caractérisé en ce que les moyens de polarisation de le source comportent un moyen de commande pour appliquer ou interrompre la polarisation de la grille et des micropointes de la source.

4. Dispositif selon la revendication 3, caractérisé en ce que le moyen de commande est constitué par un interrupteur qui, s'il est fermé, permet d'appliquer une différence de potentiel entre la grille et les micropointes et, s'il est ouvert, permet de supprimer cette différence de potentiel.

5. Dispositif selon la revendication 3, caractérisé en ce que le moyen de commande est réalisé par un couplage optique qui permet de mettre en, ou hors, circuit les moyens de polarisation de la source à micropointes.

6. Dispositif selon la revendication 3, caractérisé en ce que le moyen de commande assure la polarisation de la grille et des micropointes de la source avant le mesure du vide foumie par la jauge afin d'amorcer celle-ci.

7. Dispositif selon la revendication 3, caractérisé en ce que le moyen de commande assure la polarisation de la grille et des micropointes pendant la mesure du vide foumie par la jauge afin d'assurer le maintien de la décharge.

8. Dispositif selon l'une quelconque des revendications 1, et 3 à 7, caractérisé en ce que les moyens de polarisation de la source appliquent à la grille de la source un potentiel égal ou voisin de celui de l'enceinte.

9. Dispositif selon la revendication 8, caractérisé en ce que ce potentiel est celui de la masse.

10. Dispositif selon l'une quelconque des revendications 1 et 3 à 9, caractérisé en ce qu'il comprend un circuit automatique pour l'amorçage et/ou le maintien qui comporte un comparateur dont une des entrées est reliée à une tension de référence et dont l'autre entrée est reliée à une sortie en tension des moyens de mesure de la jauge, la sortie de ce comparateur étant reliée aux moyens de polarisation de la source par l'intermédiaire d'un circuit de déclenchement réagissant sur un état donné ou à un changement d'état du comparateur.
